# EUROPEAN PATENT SPECIFICATION

(11) **EP 2 373 591 B1**
(45) Date of publication and mention of the grant of the patent: **13.04.2016**
(21) Application number: 09795788.0
(22) Date of filing: 22.12.2009
(51) Int. Cl.: C03C 17/28, C03C 17/00

(54) **SCRATCH MASKING COATING FOR GLASS CONTAINERS**
KRATZABDECKBESCHICHTUNG FÜR GLASBEHÄLTER
REVÊTEMENT OCCULTANT LES RAYURES POUR RÉCIPIENTS EN VERRE

(30) Priority: 23.12.2008 EP 08172678
(43) Date of publication of application: 12.10.2011
(73) Proprietor: ARKEMA B.V., 3196 Ke Vondelingenplaat-Rotterdam (NL)
(72) Inventor: HOEKMAN, Leendert, Cornelis, NL-4461 NM Goes (NL); SIEBENLIST, Ronnie, NL-4434 AD Kwadendamme (NL)
(74) Representative: Lhoste, Catherine
(86) International application number: PCT/EP2009/067798
(87) International publication number: WO 2010/072784

(56) References cited:
- EP-A1- 1 731 227
- WO-A-2006/021233
- US-A- 5 346 544
- DATABASE WPI Week 198439 Thomson Scientific, London, GB; AN 1984-241312 XP002529154 & JP 59 145259 A (ODAWARA KASEI KK) 20 August 1984 (1984-08-20) & JP 59 145259 A (SAPPORO BREWERIES; ODAWARA KASEI KK) 20 August 1984 (1984-08-20)
- DATABASE WPI Week 198729 Thomson Scientific, London, GB; AN 1987-201856 XP002529288 -& JP 62 128951 A (RIKEN VITAMIN CO) 11 June 1987 (1987-06-11)

## Description

The present invention relates to the use of oil-in-water emulsions for improving glass surface appearance, particularly the external surfaces of glass containers. More particularly, the present invention relates to a scratch masking coating for glass bottles, which enhances appearance.

Glass articles such as returnable bottles are handled a great number of times during manufacture, inspection, filling, shipping, washing etc. During such handling the bottles come into contact with various mechanical devices such as conveyors, inspection devices and the like as well as contact with other glass containers (such as bottles, jars, and the like) and surfaces such as boxes, shelves etc. This high degree of contact causes damage either by breakage, cracking, scratching or other defects of the surface.

The use of scratch or scuff masking agents on glass containers is known. Such masking agents desirably mask scuffs, and exhibit an acceptable durability and surface properties. Desirable properties for scuff masking agents include water resistance and durability while being non-toxic and removable in alkaline bottle washing operations.

Coatings for glassware can comprise polymeric materials, which cure after application to the bottle surface, either at room temperature or upon heating. For example, US Patent Number 4,273,834 discloses a specific organopolysiloxane and a curing catalyst that are applied to glass articles to mask abrasions. The material is cured on bottle surfaces at room temperature or under heating. US Patent Number 5,346,544 discloses triglyceride materials and fatty acid esters of isopropyl alcohol as a coating for glass containers which are emulsified in water, applied to glass bottles and dried at room temperature or with heating.

US Patents Numbers 4,792,494 and 4,834,950 disclose the use of modified polyethylene preferably in the form of an aqueous dispersion to form a protective coating on glass surfaces. The coating is typically applied at the end of a hot end finishing process whereby residual heat of the glass aids drying in a conventional cold end coating process.

US Patent Number 3,296,173 discloses a protective coating for glass comprising a reaction product of polyvinyl alcohol, an emulsified polyolefin and ammonium chloride. The coating is applied and heated whereby the composition reacts to produce a durable coating.

Scratch-masking coatings on glass are also disclosed in JP59145259 and WO 2006/021233.

The variety of designs for glass bottle handling, cleaning and filling operations results in a limitations on the applicability of prior art coating methods. Protective coatings are applied to glass containers during manufacture in either a hot end process and/or cold end process. In single use glass containers, such protective coatings are sufficient to protect against scuffing during the life of the container.

With returnable glass containers, which can be washed and refilled, for example 20 to 60 times or more, the 'production applied' coatings are washed off and protection is lost. As the number of return cycles increases, so does scuffing which results in an undesirable appearance.

In order to provide a better appearance, returned bottles are treated with an anti-scuff coating during each wash/refill cycle. Coating systems that rely on heat to cure or dry an applied coating are not effective on lines where the glass bottles are cool.

In emulsion based coating systems, instability of the emulsion on the glass surface is desired such that the emulsion breaks and the oil phase coating is deposited on the glass surface. Aqueous emulsion based coating systems often rely on emulsion destabilization by breaking due to water phase evaporation.

However, moisture on the bottles such as from condensation can adversely impact such systems, and with some coatings, long cure times due to moisture such as from condensation can adversely impact a coating system. All current products known to date show poor or not satisfactory performances when applied on wet bottles, or on cold bottles which become wet due to condensation, for example during filling of glass bottles or containers, with cold stuffs, typically cold liquids, such as sparkling liquids, e.g. sparkling water, sodas, and the like.

Indeed, the applied product is diluted by the condensation water on the outside of the container, said dilution mainly resulting in a 'rinsing off' of the applied coating. Rinsing off would mean no coating at all.

Solutions to this problem already exist, such as systems relying on emulsion destabilization through the addition of an emulsion destabilizer.

Emulsions based upon high emulsifier concentration consist in using more concentrated emulsions, because the condensation water dilutes said emulsion. However, using more concentrated emulsions results in a not acceptable coating, since the amount of condensation water strongly varies, due to dew-point variations, so that the use of concentrated emulsions is not satisfying.

An example of addition of emulsion destabilizer is disclosed in EP-A-1 731 227. In this document, the emulsion breaker is an acid, and the result is an improved performance of the desired coating, even in the presence of condensation on the outer parts of the glass containers.

However the use of emulsion breakers, such as acids, suffer from several disadvantages, and it would be highly desirable to use emulsions with a neutral pH, in order to avoid, among others and to recite the main drawbacks of acid emulsions:
- corrosion issues, for both bottle closure and equipments;
- issues with dyes, especially in labels that are pH sensitive;
- security issues for local workers and end users;
- environmental issues due to acidic effluents that are disposed off.

Now therefore, the main objectives of the present invention are to provide a formulation to be applied on returnable containers in order to face-lift or mask the white reflecting bands (scuff bands) that appear at the container-to-container (or other container to devices or surfaces) contact zones, because of intense glass to glass contact (or glass to devices and the like, as explained above), mainly during the filling process, after several trips of returnable glass containers.

Another objective of the present invention is to provide a process for applying such formulation (a 'masking fluid'), in order to repair the visual aspect of such containers, since the presence of scuff bands strongly reduces the appearance of containers.

A further objective of the present invention consists in providing an efficient scratch-masking or scuff-masking fluid, especially in case of filling conditions in which containers are filled with cold liquids, and water condensation of moisture at the container surface occurs.

Still another objective is to provide an alternative solution to stable emulsion that would simply be rinsed off or strongly diluted, thereby avoiding the presence of significant higher concentration of active ingredients in the emulsion.

Still another objective of the present invention is to avoid the use of acid additive as a destabilizer that would lead to corrosion issues, label issues, as well as security and environmental issues.

It has now surprisingly been found that the above objectives are met, in whole or in part, with the use of scratch-masking emulsions of the present invention, which are now described in more details here below. Still other objectives will appear in the below description of the present invention.

Therefore, the present invention relates to an improved formulation and an improved process for masking containers at these cold and wet conditions.

Both laboratory tests and field experience showed that several parameters do influence the efficiency of masking, related to the emulsion stability.

Besides the composition of the masking product itself, pH, water hardness or salt content of the water used for preparing the emulsion has impact.

The present invention relies on the fact that, contrary to the currently used emulsions that generally comprise a high amount of surfactant, especially more than 20 weight% (wt%), the use of less than 5 weight% of surfactant in the scratch-masking composition provides excellent results, both in cold and wet conditions.

The above formulation comprises from 1.5 wt% to 5 wt% of at least one surfactant and from 95 wt% to 98.5 wt% of at least one oil.

In the above formulation, any surfactant(s) and any oil(s) can be mixed together, provided that they are miscible the one in the other, and typically are able to form an aqueous oil-in-water emulsion.

Moreover, preferred formulations to be used as oil-in-water emulsions are liquid formulations, solid formulations being not convenient as scratch-masking coatings. The formulations for use in the present invention should therefore be in liquid form at operating conditions.

Any type of surfactant known by the skilled in the art is convenient for the formulation used in the present invention, provided that said surfactant is miscible within the oil(s). The surfactants can be non-ionic, anionic, cationic or zwitterionic. Preferably, the surfactant(s) are non-ionic in order to avoid mixing problems with the oil(s), and, when anionic, to prevent salt formation when emulsified with ion-containing water.

According to a preferred aspect, the surfactant(s) used in the present invention may be chosen from among:
- alkoxylated (preferably ethoxylated and/or propoxylated) phenoxy alkyls;
- optionally alkoxylated (preferably ethoxylated and/or propoxylated) primary or secondary alcohols, such as, by way of non limiting examples, oleyl- or stearyl-alcohols;
- alkoxylated (preferably ethoxylated and/or propoxylated) alkylamines, such as, by way of non limiting examples, surfactants sold by CECA S.A., under the name Noramax^{®}, preferably Noramax^{®} S2, and Noramax^{®} S5;
- alkoxylated (preferably ethoxylated and/or propoxylated) acids, such as, by way of non limiting examples, oleic acid and palmitic acid;
- alkoxylated (preferably ethoxylated and/or propoxylated) esters, preferably glycerol esters; and
- sorbitan esters or alkoxylated (preferably ethoxylated and/or propoxylated) sorbitan esters.

When ethoxylated, the surfactants preferably comprise an average of up to 15 EO units per mole.

Since the formulations are used in the present invention for coating of glass containers in the food and beverage industry, the surfactant(s) are preferably chosen from among those listed in the European food additive list E numbers, more preferably from sections E400 to E499, and still more preferably from among the group of sorbitan esters, sections E491 to E496.

Mixtures of two or more surfactant(s) may be used.

Besides the surfactant(s), the formulation for use in the present invention comprises at least one oil, which may be of any type known in the art. By "oil" is meant any compound, oil or polymer, that is miscible with the surfactant(s) but not miscible with water and capable of forming an oil-in-water emulsion, that is to say an oil or polymer discontinuous phase in an aqueous or water continuous phase.

The oil is chosen from among:
- polyolefins such as paraffins oils;
- fatty acids;
- fatty esters, preferably mono esters, having more than 10 carbon atoms, and preferably up to 40 carbon atoms;
- sorbitan esters or alkoxylated (preferably ethoxylated and/or propoxylated) sorbitan esters.
- glycol, mono-, and/or and di-esters; and
- glycerol, mono- and/or di- and/or tri-esters.

Mixtures of two or more oil(s) may be used.

When necessary and/or when desired, the above-described formulations comprising at least one surfactant and at least one oil, may also comprise one or more additives usually used and known in the art, such as, for example, those chosen from among:
- biocides, bactericides;
- dyes;
- emulsion destabilizers, such as acids;
- perfumes, odorants;
- UV absorbers, light absorbers, impact absorbers;
- and the like.

Such additives may be added in the formulation oil(s) + surfactant(s) and/or in the oil-in-water ready-to-use emulsion and/or in the aqueous phase or water used for forming the emulsion. According to a preferred embodiment the formulation for use in the present invention does not contain any additive, and preferably consists in a mixture of at least one oil and at least one surfactant, such as those described above.

As previously described, the formulation (oil(s) + surfactant(s)) is used as an oil-in-water emulsion, that is to say a water continuous phase having dispersed or emulsified therein an oil phase, wherein the oil phase is the scratch-masking coating.

The emulsion is typically prepared by mixing an oil phase-containing surfactant(s) with an aqueous or water phase. The oil phase and surfactant can be supplied as a concentrate to be mixed with water by the end user to form the treatment emulsion or supplied as a ready to use emulsion.

The present invention also encompasses emulsions prepared by mixing water and at least one of the above-defined surfactants, then adding and mixing at least one of the above-defined oils, or prepared by mixing water and at least one of the above-defined oils, then adding and mixing at least one of the above-defined surfactants.

In other words, the scratch-masking emulsion to be applied on the glass surface may be prepared by mixing at least one oil, at least one surfactant and water, in any order, so as to obtained the desired oil-in-water emulsion.

The concentration of the oil phase in the as applied emulsion is from 2% to 20% by weight, preferably from 3% to 10% by weight, more preferably from 3% to 8% by weight of the total weight of the oil-in-water emulsion. Variations in water quality such as pH or hardness can impact the quality and stability of the final treatment emulsion when supplied as a concentrate for mixing with "local" water.

The teaching of the prior art show that too stable emulsions do not work properly and when too unstable, phase separation would occur already in feed lines before the application onto the glass containers, which leads to either no coating at all or to an overloading of scratch-masking coating.

The formulation for use of the present invention, although comprising a relatively low amount of surfactant(s), surprisingly shows outstanding results when used as an oil-in-water emulsion.

The emulsion is obtained by thoroughly mixing water, at least one surfactant, and at least one oil, as described above. Any mixing device known in the art is appropriate, provided that, depending on parameters and layout, the amount of mixing energy is set in such a way that homogeneous emulsion is supplied to the applicator but of limited emulsion stability.

The mixing energy devoted to the preparation of the above described oil-in-water emulsion should be set so that the emulsion is stable for a period time ranging from a few seconds to a few hours, and preferably for period of time that is adapted so as to supply a homogenous working liquid to the applicator. This period of time therefore depends on the flow lines, application devices, and the like.

By stable emulsion for a period of time is meant that no macroscopic phase separation (nearly complete breaking of the emulsion) occurs between the oil and the water during the time ranging from a few seconds to a few hours and preferably for period of time that is adapted so as to supply a homogenous working liquid to the applicator. The emulsion of the invention has a limited stability meaning that the emulsion will break on a time scale much longer then a few hours and preferably after a period of time that is adapted so as to supply a homogenous working liquid to the applicator. However a slight coalescence of the oil drops or a slight flocculation or a slight creaming might already have begun on a microscopic level during the period of time ranging from a few seconds to a few hours and during the period of time that is adapted so as to supply a still homogenous working liquid to the applicator.

Any mixing means may be used to achieve an oil-in water-emulsion from water and the above described formulation. Typical mixers or emulsifying devices are those known in the art, and as non limiting examples, mention may be made of dynamic mixers, static mixers, ultra-sonic mixing devices, pumps, and the like.

According to a further aspect, the present invention provides a process for applying a coating, typically a scratch-masking coating, to a glass container surface, such as bottles, that is adaptable to a variety of glass surface and application conditions.

The coating provides for masking of scratches and abrasions on the glass container surface, which adversely impact its commercial value. For examples, scratches or abrasions on glass bottles, especially on returnable glass bottles used for beverages, result in an undesirable haze or white appearance, which decreases the value of the bottle. The process of the present invention provides a coating for glass containers that masks such scratches or abrasions. In addition, the coating can enhance the lubricity of the container surface.

The coating of the present invention is applied in the form of an oil-in-water emulsion that may be applied via spray application, dipping or any other contact method (sponge, and the like). Spray application is the preferred method of application. In the oil-in-water emulsion of the present invention, the oil phase comprises the coating treatment for the glass surface.

The process of the present invention provides for enhanced control of emulsion based glass surface masking coatings that is applicable in many types of application systems, such as those where the glass containers are warm as well as those where the glass containers are cold.

The process of the present invention can be employed in a variety of bottle handling operations, warm as well as cold application temperatures, as well as be adapted to changing conditions such as water variations or changes in condensation due to variation in humidity in the surrounding area.

The glass containers are considered as hot if their temperature is from 25°C to 100°C, preferably from 25°C to 65°C, more preferably from 25°C to 45°C and advantageously from 25°C to 40°C. The glass containers are considered as cold if their temperature is from 2°C to 25°C, preferably from 5°C to 22°C, more preferably from 6°C to 20°C and advantageously from 6°C to 18°C.

By using an oil-in-water emulsion based on the above described formulation, that comprises a low surfactant amount, as compared to the stable emulsions known and used in the art, coating application efficiency is enhanced, since the emulsion with its limited stability is not too stable and "naturally" broken when in contact with the glass surface.

Moreover, the low amount of surfactant(s), as well as the neutral or almost neutral pH of the emulsion, leads to less, or even no, corrosion, security or environmental issues. Additionally, dyes in labels, which are generally known to be surfactant sensitive, are far much less affected, while using the oil-in-water emulsion as described in the present invention.

More precisely, the present invention provides a process for applying a scratch-masking coating to a glass surface, more specifically to a glass container surface, such as bottles, comprising at least the step of applying at least one scratch-masking oil-in-water emulsion as described above, onto at least one part of, or onto the entire, outer surface of said glass container.

According to a more specific embodiment, the process of the present invention comprises at least the following steps:
- washing of the glass container;
- optionally applying a lubricant onto the outer surface of said glass container;
- filling and capping the glass container;
- optionally labelling the glass container; and
- applying at least one scratch-masking coating emulsion as defined above.

The washing of the glass container may be realised according to any method well known in the art, and for example using water, preferably hot water, more preferably together with one or more detergent, for example a base, such as sodium hydroxide.

At least one lubricant can also be applied onto the outer surface of the glass container after washing. Such lubricants are known in the field, such as for example Tegoglass^{®} 3000 Plus provided by Arkema.

The glass containers are then filled and capped, again according to known methods, with cold, tepid, or even warm liquids. As evidenced by the annexed examples, the efficiency of the scratch-masking coating according to the present invention is not adversely affected by the condensation that may appear on the outer surface of the glass container, because of differences of temperatures between the glass container, the filled liquid, and/or the outer temperature and relative humidity of the environment.

Labelling may be realised before or after applying the scratch-masking emulsion. Due to the neutral pH of the emulsions used in the present invention, and since said emulsions do contain only a low amount of surfactant, labels, and more particularly label dyes, are not, or only slightly, affected.

In the present invention the pH is considered as neutral or almost neutral for a pH value between 5 and 8, preferably between 5.5 and 7.5 and more preferably between 6 and 7.

The labelling step can therefore be realised before the scratch-masking coating step. The step consisting in applying the scratch-masking emulsion may thus be the last step before the newly washed, refilled and labelled glass containers are once again put on the market, and sold to the customers.

No specific equipment is required for carrying out the process of the invention, this meaning that any and all known equipments in the art are convenient for the use and process of the invention.

The application equipment typically includes mixing and storage vessels, pumps, transfer and feed lines, spray apparatus and control and monitoring equipment.

Preferably, the equipment comprises one or more mixing vessel(s); dosing and circulating pump(s); mixing unit (can be the pump itself); circulation piping(s); applying means, such as spraying devices; and the like.

The equipment may also comprise controlling means aiming at monitoring the process of applying the scratch-masking emulsion. Such controlling means may be for example optical means detecting the presence or the absence of a container in front of the applying means, and/or detecting the presence and the quantity of scuff bands or scratches, so that the minimum amount of emulsion is applied on the containers to obtain the best efficiency. According to a preferred aspect, the controlling means are monitored via a computer that may interact with the dosing pump(s) and applying means.

Still according to a preferred embodiment, the above described equipment may be encased within a "scratch-masking" cabinet that can be easily adapted to existing bottling lines, comprising the necessary equipment for washing, filling, capping and labelling glass containers, typically returnable glass bottles.

The present invention is illustrated in more detail in the following nonlimiting examples.

### Examples

In order to have an efficient and successful application on cold and wet bottles, a low surfactant amount of the formulation is required.

Various formulations are prepared, with the following characteristics:

Fixed parameters are the following:
- Mixing conditions, power and mixing time;
- Bottle conditions;
- Spray conditions, spray volume, spray tool conditions;
- Water quality for dilution;
- Storage conditions.

More precisely:
- Concentration (wt)% : 5.0 - 7.5;
- Water hardness : 3 °DH;
- Bottle temperature : 7.5 °C;
- Spray amount per bottle : 0.5 mL per bottles (upper scuff band only);
- Storage conditions : 22°C - 25°C, 100% relative humidity, 1 hour;
- Mixing means : Dispermat^{®}, continuous at 20 % stirring power, 5 minutes.

The various formulations are applied with the following conditions:
- Application gun : Air guided spray (P guide air = 2 bar, P spray = 1.5 bar);
- Spray pattern : horizontal;
- Spray volume : 0.5 mL, directed to shoulder scuff band only;
- Bottle rotation : ± 30 rpm;
- Bottle type : Coca Cola^{®} 25 cL;
- Number of bottles : 5.

The bottles are checked for assessing the scratch-masking efficacy, 24 hours after application, by visual observation of the bottle shoulder scuff band. For each bottle, a note is given, from 0 to 10, "0" meaning no coating and "10" meaning 100% masked.

The emulsions are prepared with the following oils and surfactants:
• Oils

| | | |
|---|---|---|
| A: Cetiol^{®} SN | [84878-33-1] | Cetearyl Isononanoate, from Cognis; |
| B: Estol 1527 | [538-23-8] | Glycerol trioctaoate, from Uniqema; |
| C: Priolube 1544 | [29806-73-3] | 2-ethylhexyl palmitate, from Uniqema; |
| D: Priolube 3970 | [11138-60-6] | Trimethylolpropanetricaprylate/caprate, |
| from Uniqema. | | |

• Surfactants
1: Ethoxylated secondary alcohols: Softanol^{®} 30, 70, 90 200, from Ineos;
2: Sorbitan and ethoxylated sorbitan: SMO and SML, from Evonik;
3: Ethoxylated fatty glycerol esters: BL276, Tagat^{®} TO V, from Evonik.

A first set of formulations is prepared using Cetiol^{®} SN as the oil. The results are presented in Table 1 below.

**-- Table 1 --**

| ***Surfactant*** | ***Softanol*^{®} *30*** | | ***Softanol*^{®} *70*** | |
|---|---|---|---|---|
| Amout of formulation in water (wt%) | **5** | **7.5** | **5** | **7.5** |
| Surfactant amount (weight%) in scratch masking formulation | Coating Appearance, avg of 5 bottles | | | |
| 25 | 1.8 | 0 | 0 | 0 |
| 5 | 5.2 | 7 | 0 | 8 |
| 2.5 | 6.8 | 10 | 3 | 10 |
| 1 | 8.6 | 10 | 8 | 10 |

The above results show that a surfactant concentration of 5 wt% is sufficient to provide acceptable results, and that even lower amounts of surfactant provide better results.

An other set of formulations is prepared with the following characteristics:
a) Opticoat^{®} 140 (from Arkema);
b) Opticoat^{®} 140 + 1 mL of emulsion breaker (12 wt% of citric acid (CA) per litre of working solution);
c) Emulsion formulation 97,5 % Cetiol^{®} SN + 2,5 % Softanol^{®} 70;
d) Emulsion formulation 97,5 % Cetiol^{®} SN + 2,5 % SMO;
e) Emulsion formulation 97,5 % Cetiol^{®} SN + 2,5 % Softanol^{®} 30;
f) Emulsion formulation 97,5 % Cetiol^{®} SN + 2,5 % Softanol^{®} 90;
g) Emulsion formulation 97,5 % Estol 1527 + 2,5 % SML;
h) Emulsion formulation 97,5 % Estol 1527 + 2,5 % SMO.

The above emulsions formulations are applied with the following conditions:
▪ Concentration (wt%) : 7.5
▪ Water hardness : 3°DH
▪ Bottle temperature : 7.5 °C
▪ Bottle rotation : ± 30 rpm
▪ Spray amount per bottle: 0.5 mL per bottles (upper scuff band only)
▪ Storage conditions : 22°C - 25°C, 100% relative humidity, 1 hour ▪ Mixing time : 5 minutes
▪ Mixing means : Dispermat^{®}, 15%, 20 %, 25 % or 30% stirring power
▪ Application gun : Air guided spray (P_{guide air} = 2 bars, P_{spray} = 1.5 bars)
▪ Spray pattern : horizontal
▪ Bottle type : Coca Cola^{®} 25 cL
▪ Number of bottles per test : 5.

The bottles are checked, as described above, for assessing the scratch-masking efficacy, 24 hours after application, by visual observation of the bottle shoulder scuff band. For each bottle, a note is given, from 0 to 10, "0" meaning no coating and "10" meaning 100% masked.

The results are presented in the following tables:
• Coating Performance at 7,5 wt%

| **Table 2** | **Opticoat**^{®} **140** | | | | | |
|---|---|---|---|---|---|---|
| | Bottle appearance | | | | | |
| Mixing | 1 | 2 | 3 | 4 | 5 | Avg |
| Dispermat^{®} 15 % | 0 | 1 | 0 | 3 | 6 | **2** |
| Dispermat^{®} 20 % | 0 | 3 | 3 | 2 | 2 | **2** |
| Dispermat^{®} 25 % | 0 | 0 | 0 | 0 | 0 | **0** |
| Dispermat^{®} 30 % | 0 | 0 | 0 | 0 | 0 | **0** |

| **Table 3** | **Opticoat 140 + 1 mL citric acid** | | | | | |
|---|---|---|---|---|---|---|
| | Bottle appearance | | | | | |
| Mixing | 1 | 2 | 3 | 4 | 5 | Avg |
| Dispermat^{®} 15 % | 7 | 8 | 9 | 6 | 7 | **7,4** |
| Dispermat^{®} 20 % | 6 | 4 | 6 | 5 | 9 | **6,0** |
| Dispermat^{®} 25 % | 3 | 5 | 5 | 3 | 7 | **4,6** |
| Dispermat^{®} 30 % | 0 | 1 | 0 | 0 | 0 | **0,2** |

| **Table 4** | **Cetiol**^{®} **SN + Softanol**^{®} **70** | | | | | |
|---|---|---|---|---|---|---|
| | Bottle appearance | | | | | |
| Mixing | 1 | 2 | 3 | 4 | 5 | Avg. |
| Dispermat^{®} 15 % | 10 | 3 | 9 | 5 | 8 | **7,2** |
| Dispermat^{®} 20 % | 9 | 9 | 9 | 7 | 9 | **8,6** |
| Dispermat^{®} 25 % | 7 | 7 | 9 | 8 | 8 | **7,8** |
| Dispermat^{®} 30 % | 9 | 7 | 7 | 7 | 10 | **8,0** |

| **Table 5** | **Cetiol**^{®} **SN + SMO** | | | | | |
|---|---|---|---|---|---|---|
| | Bottle appearance | | | | | |
| Mixing | 1 | 2 | 3 | 4 | 5 | Avg |
| Dispermat^{®} 15 % | 10 | 10 | 10 | 10 | 10 | **10** |
| Dispermat^{®} 20 % | 10 | 10 | 10 | 10 | 10 | **10** |
| Dispermat^{®} 25 % | 10 | 10 | 10 | 10 | 10 | **10** |
| Dispermat^{®} 30 % | 10 | 10 | 10 | 10 | 10 | **10** |

| **Table 6** | **Cetiol**^{®} **SN** + **Softanol**^{®} **30** | | | | | |
|---|---|---|---|---|---|---|
| | Bottle appearance | | | | | |
| Mixing | 1 | 2 | 3 | 4 | 5 | Avg. |
| Dispermat^{®} 15 % | 10 | 10 | 10 | 10 | 10 | **10** |
| Dispermat^{®} 20 % | 10 | 10 | 10 | 10 | 10 | **10** |
| Dispermat^{®} 25 % | 10 | 10 | 10 | 10 | 10 | **10** |
| Dispermat^{®} 30 % | 10 | 10 | 10 | 10 | 10 | **10** |

| **Table 7** | **Estol 1527 + SML** | | | | | |
|---|---|---|---|---|---|---|
| | Bottle appearance | | | | | |
| Mixing | 1 | 2 | 3 | 4 | 5 | Avg. |
| Dispermat^{®} 30 % | 10 | 10 | 10 | 10 | 10 | **10** |

| **Table 8** | **Estol 1527 + SMO** | | | | | |
|---|---|---|---|---|---|---|
| | Bottle appearance | | | | | |
| Mixing | 1 | 2 | 3 | 4 | 5 | Avg. |
| Dispermat^{®} 30 % | 10 | 10 | 10 | 10 | 10 | **10** |

| **Table 9** | **Estol 1527 + Tagat^{®} TO V** | | | | | |
|---|---|---|---|---|---|---|
| | Bottle appearance | | | | | |
| Mixing | 1 | 2 | 3 | 4 | 5 | Avg. |
| Dispermat 30 % | 10 | 10 | 5 | 10 | 10 | **9** |

| **Table 10** | **Estol 1527 + BL276** | | | | | |
|---|---|---|---|---|---|---|
| | Bottle appearance | | | | | |
| Mixing | 1 | 2 | 3 | 4 | 5 | Avg. |
| Dispermat 30 % | 10 | 10 | 10 | 10 | 10 | **10** |

The products known in the art, such as Opticoat^{®} 140, do show a poor performance when applied on wet bottles, or cold bottles which become wet due to condensation: Effect of dilution and simple rinse off is observed.

The present invention allows to obtain comparable or even a superior performance to the performance obtained by adding an emulsion breaker, for example an acid, as disclosed in EP-A-1 731 227.

An other advantage of the present invention is that a neutral pH emulsion is applied, which has several significant advantages:
- No corrosion issues, both bottle closure and equipments
- No issues with dyes in labels that are pH sensitive.
- No security/hazard issues for local workers and end users.

Further tests are conducted to assess the efficiency of the use of the present invention on wet ware.

To simulate these wet conditions, the cold filled bottles were stored at 25°C, 90% relative humidity for about 1 minute, prior to coating application. The bottles are further submitted to standard storage conditions: 22°C - 25°C, 100% relative humidity for 1 hour.

Emulsion preparation was done with 30% stirring power of Dispermat^{®} stirrer.

The results are presented in Table 11 below.

| **Table 11** | ***Amount formulation in water (wt%)*** | ***Bottle appearance*** | | | | | |
|---|---|---|---|---|---|---|---|
| Formulation | | 1 | 2 | 3 | 4 | 5 | Avg |
| Cetiol^{®} SN + SMO | 5,0 | 8 | 5 | 10 | 10 | 10 | **8.2** |
| | 7,5 | 9 | 10 | 10 | 10 | 10 | **9.8** |
| Estol 1527 + SMO | 5,0 | 9 | 10 | 10 | 10 | 10 | **9.8** |
| | 7,5 | 10 | 10 | 10 | 10 | 10 | **10** |

The above tests show that the formulations of the present invention are also very efficient on wet glass ware.

While the present invention has been described with respect to particular embodiments thereof, it is apparent that numerous other forms and modifications of the invention will be obvious to those skilled in the art.

## Claims

1. Use of a formulation comprising from 1.5 wt% to 5wt% of at least one surfactant and from 95 wt% to 98.5 wt% of at least one oil, in the form of an aqueous emulsion, as a scratch-masking coating on a glass surface, wherein the formulation comprises less than 5 weight% of at least one surfactant and wherein the oil is chosen from among:
• polyolefins such as paraffins oils;
• fatty acids;
• fatty esters, preferably mono esters, having more than 10 carbon atoms, and preferably up to 40 carbon atoms;
• sorbitan esters or alkoxylated (preferably ethoxylated and/or propoxylated) sorbitan esters.
• glycol, mono-, and/or and di-esters; and
• glycerol, mono- and/or di- and/or tri-esters
and wherein the concentration of the oil phase in the as applied emulsion is from 2% to 20% by weight.

2. Use according to claim 1, wherein the surfactant is chosen from among:
• alkoxylated (preferably ethoxylated and/or propoxylated) phenoxy alkyls;
• optionally alkoxylated (preferably ethoxylated and/or propoxylated) primary or secondary alcohols;
• alkoxylated (preferably ethoxylated and/or propoxylated) alkylamines;
• alkoxylated (preferably ethoxylated and/or propoxylated) acids;
• alkoxylated (preferably ethoxylated and/or propoxylated) esters, preferably glycerol esters; and
• sorbitan esters or alkoxylated (preferably ethoxylated and/or propoxylated) sorbitan esters.

3. Use according to any of claims 1 to 2, wherein the formulation further comprises one or more additives chosen from among biocides, bactericides, dyes, emulsion destabilizers, perfumes, odorants, UV absorbers, light absorbers, impact absorbers, and the like.

4. Use according to any of claims 1 to 2, wherein the formulation consists in at least one oil, and at least one surfactant.

5. Use according to any of claims 1 to 4, wherein the concentration of the oil phase in the as applied emulsion is from 3% to 10% by weight of the total weight of the oil-in-water emulsion.

6. Process for applying a scratch masking coating on a glass surface comprising at least the step of applying, onto at least one part of, or onto the entire, outer surface of said glass container, at least one scratch-masking oil-in-water emulsion as defined in any of claims 1 to 5.

7. Process according to claim 6, wherein said scratch masking coating is applied via spraying, dipping or a contact application means, preferably via spraying means.

8. Process according to any of claims 6 or 7, wherein the scratch-masking emulsion is applied on a glass surface, under warm or under cold conditions.

9. Process according to any of claims 6 to 8, comprising at least the following steps:
• washing of the glass container;
• optionally applying a lubricant onto one or several parts of, or else on the whole outer surface of said glass container;
• filling and capping the glass container;
• optionally labelling the glass container; and
• applying at least one scratch-masking coating emulsion as defined in any of claims 1 to 5.

## Patentansprüche

1. Verwendung einer Formulierung, die 1,5 Gew.-% bis 5 Gew.-% mindestens eines Tensids und 95 Gew.-% bis 98,5 Gew.-% mindestens eines Öls umfasst, in Form einer wässrigen Emulsion als Kratzermaskierungsbeschichtung auf einer Glasoberfläche, wobei die Formulierung weniger als 5 Gew.-% mindestens eines Tensids umfasst und wobei das Öl ausgewählt ist aus :
• Polyolefinen wie Paraffinölen;
• Fettsäuren;
• Fettestern, vorzugsweise Monoestern, mit mehr als 10 Kohlenstoffatomen und vorzugsweise bis zu 40 Kohlenstoffatomen;
• Sorbitanestern oder alkoxylierten (vorzugsweise ethoxylierten und/oder propoxylierten) Sorbitan estern;
• Glykol, Mono- und/oder Diestern; und
• Glycerin, Mono- und/oder Di- und/oder Triestern;
und wobei die Konzentration der Ölphase in der Emulsion in Aufbringungsform 2 bis 20 Gew.-% beträgt.

2. Verwendung nach Anspruch 1, wobei das Tensid ausgewählt ist aus:
• alkoxylierten (vorzugsweise ethoxylierten und/oder propoxylierten) Phenoxyalkylverbindungen;
• gegebenenfalls alkoxylierten (vorzugsweise ethoxylierten und/oder propoxylierten) primären oder sekundären Alkoholen;
• alkoxylierten (vorzugsweise ethoxylierten und/oder propoxylierten) Alkylaminen;
• alkoxylierten (vorzugsweise ethoxylierten und/oder propoxylierten) Säuren;
• alkoxylierten (vorzugsweise ethoxylierten und/oder propoxylierten) Estern, vorzugsweise Glycerinestern; und
• Sorbitanestern oder alkoxylierten (vorzugsweise ethoxylierten und/oder propoxylierten) Sorbitanestern.

3. Verwendung nach einem der Ansprüche 1 bis 2, wobei die Formulierung ferner ein oder mehrere Additive, die aus Bioziden, Bakteriziden, Farbstoffen, Emulsionsdestabilisatoren, Parfümen, Odorantien, UV-Absorbern, Lichtschutzmitteln, Pralldämpfern und dergleichen ausgewählt sind, umfasst.

4. Verwendung nach einem der Ansprüche 1 bis 2, wobei die Formulierung aus mindestens einem Öl und mindestens einem Tensid besteht.

5. Verwendung nach einem der Ansprüche 1 bis 4, wobei die Konzentration der Ölphase in der Emulsion in Aufbringungsform 3 bis 10 Gew.-% des Gesamtgewichts der Öl-in-Wasser-Emulsion beträgt.

6. Verfahren zum Aufbringen einer Kratzermaskierungsbeschichtung auf eine Glasoberfläche, umfassend mindestens den Schritt des Aufbringens mindestens einer kratzermaskierenden Öl-in-Wasser-Emulsion gemäß einem der Ansprüche 1 bis 5 auf mindestens einen Teil der Außenoberfläche oder die gesamte Außenoberfläche des Glasbehälters.

7. Verfahren nach Anspruch 6, bei dem die Kratzermaskierungsbeschichtung mittels Spritzen, Tauchen oder einer Kontaktapplikationseinrichtung, vorzugsweise mittels Sprüheinrichtungen, aufgebracht wird.

8. Verfahren nach einem der Ansprüche 6 oder 7, bei dem die Kratzermaskierungsemulsion unter warmen oder unter kalten Bedingungen auf eine Glasoberfläche aufgebracht wird.

9. Verfahren nach einem der Ansprüche 1 bis 6, umfassend mindestens die folgenden Schritte:
• Waschen des Glasbehälters;
• gegebenenfalls Aufbringen eines Gleitmittels auf einen Teil oder mehrere Teile der Außenoberfläche oder die gesamte Außenoberfläche des Glasbehälters;
• Füllen und Verschließen des Glasbehälters;
• gegebenenfalls Etikettieren des Glasbehälters; und
• Aufbringen mindestens einer Kratzermaskierungsbeschichtungsemulsion gemäß einem der Ansprüche 1 bis 5.

## Revendications

1. Utilisation d'une formulation comprenant de 1,5% en poids à 5% en poids d'au moins un agent tensioactif et de 95% en poids à 98,5% en poids d'au moins une huile, sous la forme d'une émulsion aqueuse, comme revêtement de masquage de rayures sur une surface en verre, **caractérisée en ce que** la formulation comprend moins de 5% en poids d'au moins un agent tensioactif et où l'huile est choisie parmi :
- les polyoléfines telles que les huiles de paraffine ;
- les acides gras ;
- les esters gras, préférablement les monoesters, ayant plus de 10 atomes de carbone, et préférablement jusqu'à 40 atomes de carbone ;
- les esters de sorbitane ou les esters de sorbitane alcoxylés (préférablement éthoxylés et/ou propoxylés) ;
- les mono-, et/ou diesters de glycol ; et
- les mono-, et/ou di- et/ou triesters de glycérol ;
et où la concentration de la phase huileuse dans l'émulsion telle qu'appliquée va de 2% à 20% en poids.

2. Utilisation selon la revendication 1, **caractérisée en ce que** l'agent tensioactif est choisi parmi :
- les phénoxyalkyles alcoxylés (préférablement éthoxylés et/ou propoxylés) ;
- les alcools primaires ou secondaires éventuellement alcoxylés (préférablement éthoxylés et/ou propoxylés) ;
- les alkylamines alcoxylées (préférablement éthoxylées et/ou propoxylées) ;
- les acides alcoxylés (préférablement éthoxylés et/ou propoxylés) ;
- les esters alcoxylés (préférablement éthoxylés et/ou propoxylés), préférablement les esters de glycérol ; et
- les esters de sorbitane ou les esters de sorbitane alcoxylés (préférablement éthoxylés et/ou propoxylés).

3. Utilisation selon l'une quelconque des revendications 1 à 2, **caractérisée en ce que** la formulation comprend en outre un ou plusieurs additifs choisis parmi les biocides, les bactéricides, les colorants, les agents de déstabilisation d'émulsion, les parfums, les substances odorantes, les agents anti-UV, les agents photo-absorbants, les agents absorbeurs de chocs, et similaires.

4. Utilisation selon l'une quelconque des revendications 1 à 2, **caractérisée en ce que** la formulation est constituée d'au moins une huile, et d'au moins un agent tensioactif.

5. Utilisation selon l'une quelconque des revendications 1 à 4, **caractérisée en ce que** la concentration de la phase huileuse dans l'émulsion telle qu'appliquée va de 3% à 10% en poids du poids total de l'émulsion huile-dans-eau.

6. Procédé d'application d'un revêtement de masquage de rayures sur une surface en verre, comprenant au moins l'étape d'application, sur au moins une partie, ou sur la totalité, de la surface externe dudit conteneur en verre, d'au moins une émulsion huile-dans-eau de masquage de rayures telle que définie selon l'une quelconque des revendications 1 à 5.

7. Procédé selon la revendication 6, **caractérisé en ce que** ledit revêtement de masquage de rayures est appliqué par pulvérisation, trempage ou un moyen d'application par contact, préférablement par un moyen de pulvérisation.

8. Procédé selon l'une quelconque des revendications 6 ou 7, **caractérisé en ce que** l'émulsion de masquage de rayures est appliquée sur une surface en verre, dans des conditions chaudes ou froides.

9. Procédé selon l'une quelconque des revendications 6 à 8, comprenant au moins les étapes suivantes :
- le lavage du conteneur en verre ;
- éventuellement l'application d'un lubrifiant sur une ou plusieurs parties, ou sinon sur l'ensemble de la surface externe dudit conteneur en verre ;
- le remplissage et la fermeture du conteneur en verre ;
- éventuellement l'étiquetage du conteneur en verre ; et
- l'application d'au moins une émulsion de revêtement de masquage de rayures telle que définie selon l'une quelconque des revendications 1 à 5.
